(19) Europäisches Patentamt

European Patent Office

Office européen des brevets

(11) **EP 0 810 419 B1**

(12) **EUROPEAN PATENT SPECIFICATION**

(45) Date of publication and mention of the grant of the patent:
**19.03.2003 Bulletin 2003/12**

(51) Int Cl.⁷: **G01C 21/20**, G01C 19/00

(21) Application number: **96119897.5**

(22) Date of filing: **11.12.1996**

(54) **Navigation unit**

Navigationseinheit

Unité de navigation

(84) Designated Contracting States:
**DE FR GB IT**

(30) Priority: **31.05.1996 JP 13927096**

(43) Date of publication of application:
**03.12.1997 Bulletin 1997/49**

(73) Proprietor: **AISIN AW CO., LTD.**
**Anjo-shi Aichi-ken 444-11 (JP)**

(72) Inventors:
• **Yamada, Kunihiro**
**Anjo-shi, Aichi-ken, 444-11 (JP)**

• **Shinato, Akihiro**
**Anjo-shi, Aichi-ken, 444-11 (JP)**

(74) Representative: **VOSSIUS & PARTNER**
**Siebertstrasse 4**
**81675 München (DE)**

(56) References cited:
**US-A- 4 383 452**        **US-A- 4 505 054**

• **PATENT ABSTRACTS OF JAPAN vol. 015, no. 487 (P-1286), 10 December 1991 & JP 03 211411 A (SUMITOMO ELECTRIC IND LTD), 17 September 1991**

**Description**

The present invention relates to a navigation unit.

In the prior art, the navigation system to be mounted on a vehicle is constructed to include: a display device having a display for displaying data and a control unit for the driver to input the data; a receiver for using a variety of media; a CD-ROM driver for using a CD-ROM; and a navigation unit for supervising the entirety of the navigation system.

On the other hand, the navigation unit includes a variety of electronic parts such as a CPU, a memory and an interface, a card holder for holding a feature expansion PC card, and a gyro sensor for measuring the direction of the vehicle. Moreover, the navigation unit is usually mounted in a trunk of the vehicle and connected with the receiver and the CD-ROM driver, as also mounted in the trunk, and the display device, as mounted in the compartment.

However, the navigation unit of the prior art has such a large size and a wide occupation area that its mountability on the vehicle drops. In order to improve the mountability on the vehicle, therefore, there is provided a navigation unit which can be installed both horizontally and vertically on the vehicle. Such a unit is disclosed in the document US 4 383 452.

Incidentally, since the gyro sensor has to hold its rotation detecting axis vertical at all times, it cannot be mounted on the navigation unit which can be installed horizontally or vertically. Thus, the gyro unit having the gyro sensor is made separate of the navigation unit so that the gyro unit is installed directly on the vehicle.

In this case, however, the total occupation area of the navigation unit and the gyro unit is enlarged. In addition, the work for installing the gyro unit directly on the vehicle is troublesome, and the communications circuits or the like among the case of the gyro unit, the navigation unit and the gyro unit are required to raise the cost.

On the other hand, the navigation unit is installed horizontally while mounting two gyro sensors having different mounting directions therein. Then, when one gyro sensor is mounted vertically in the navigation unit, the other gyro sensor can also be used.

In this case, however, the two gyro sensors have to be mounted in advance in the navigation unit so that not only the cost is accordingly raised but also the occupation area is accordingly widened.

The present invention contemplates to solve the aforementioned problems of the navigation unit of the prior art and has an object to provide a vehicle navigation unit which can be installed in an arbitrary direction while mounting a gyro sensor and which can lower the cost without widening the occupation area.

The vehicle navigation unit is defined in the appended claims.

Fig. 1 is a diagram showing a first support state of the gyro sensor in the mode of embodiment of the present invention;
Fig. 2 is a diagram showing a second support state of the gyro sensor in the mode of embodiment of the present invention;
Fig. 3 is a perspective top plan view of a navigation unit in the mode of embodiment of the present invention;
Fig. 4 is a perspective back elevation of the navigation unit in the mode of embodiment of the present invention;
Fig. 5 is a front elevation of the gyro sensor in the mode of embodiment of the present invention;
Fig. 6 is a top plan view of the gyro sensor in the mode of embodiment of the present invention;
Fig. 7 is a side elevation of the gyro sensor in the mode of embodiment of the present invention;
Fig. 8 is a lefthand side elevation of the navigation unit, when installed horizontally, in the mode of embodiment of the present invention;
Fig. 9 is a top plan view of the navigation unit, when installed horizontally, in the mode of embodiment of the present invention;
Fig. 10 is a lefthand side elevation of the navigation unit, when installed horizontally, in the mode of embodiment of the present invention;
Fig. 11 is a back elevation of the navigation unit, when installed horizontally, in the mode of embodiment of the present invention; and
Fig. 12 is a side elevation of the lower case unit of the casing in the mode of embodiment of the present invention.

The present invention will be described in detail in connection with its mode of embodiment with reference to the accompanying drawings.

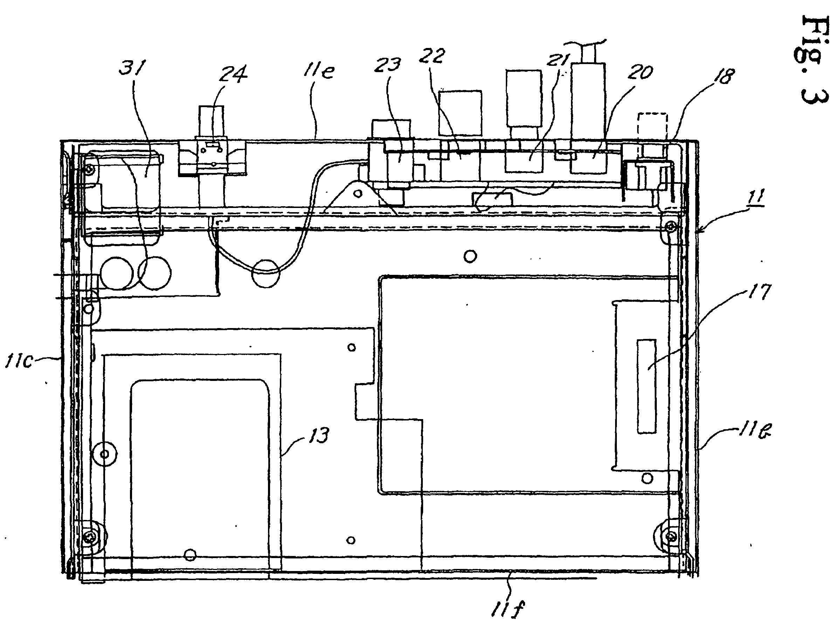

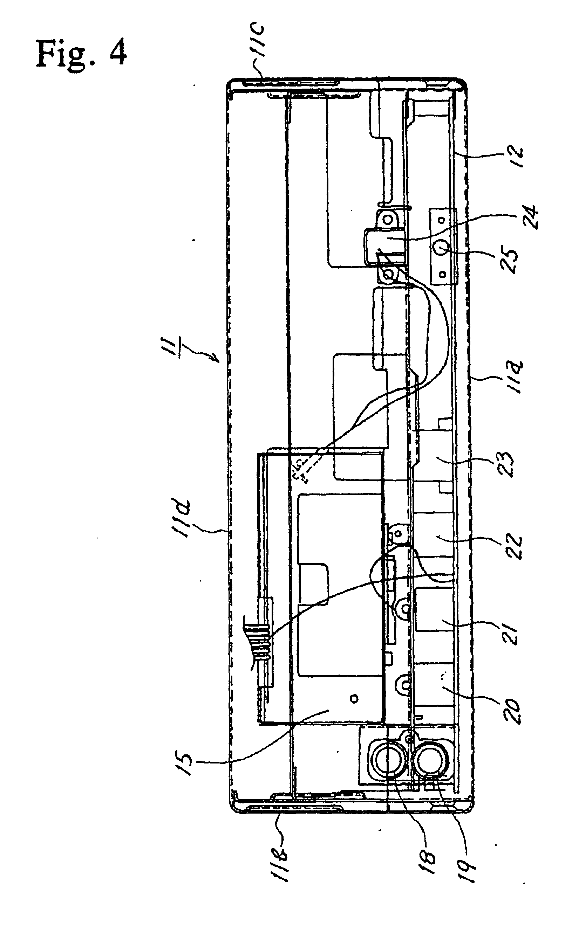

Fig. 3 is a perspective top plan view of a navigation unit in the mode of embodiment of the present invention, and Fig. 4 is a perspective back elevation of the navigation unit in the mode of embodiment of the present invention.

In the Drawings, reference numeral 11 designates a casing which is composed of a bottom wall 11a, side walls 11b and 11c, a top wall 11d, a back wall lie and a front wall 11f. On the other hand, numeral 12 designates a PC board arranged horizontally in the casing 11. This PC board 12 is equipped with not only a card holder 13 for holding the not-shown feature expansion PC card but also a variety of electronic parts such as a CPU, a memory or an interface, although not shown.

Moreover: numeral 15 designates a GPS for positioning the present place of a vehicle; numeral 17 a connector for a flexible cable; numerals 18 and 19 pin jacks; numeral 20 an RGB output; numeral 21 a feature expansion connector; numeral 22 a connector for a communications system; numeral 23 a connector for a vehicular power source; numeral 24 an antenna connector; numeral 25 a connector for a remote control eye; and numeral 31 a gyro sensor for detecting the direction of the vehicle.

Incidentally, the navigation unit thus constructed has a large size and a wide occupation area so that its moutability on the vehicle lowers. In order to improve the mountability on the vehicle, the navigation unit can be installed in both horizontal and vertical positions.

Specifically, the bottom wall 11a is positioned to confront the floor of the vehicle, when the navigation unit is to be installed horizontally, and the back wall lie is positioned to confront the floor when the navigation unit is to be installed vertically. Incidentally, when the navigation unit is to be installed vertically, a predetermined gap is left between the back wall lie and the floor of the vehicle so that the connectors 21, 22, 23, 24 and 25, as protruded from the back wall 11e, may not interfere with the floor.

Moreover, the mounting direction of the gyro sensor 31 can be changed by 90 [degrees] for the cases in which the navigation unit is installed horizontally and vertically.

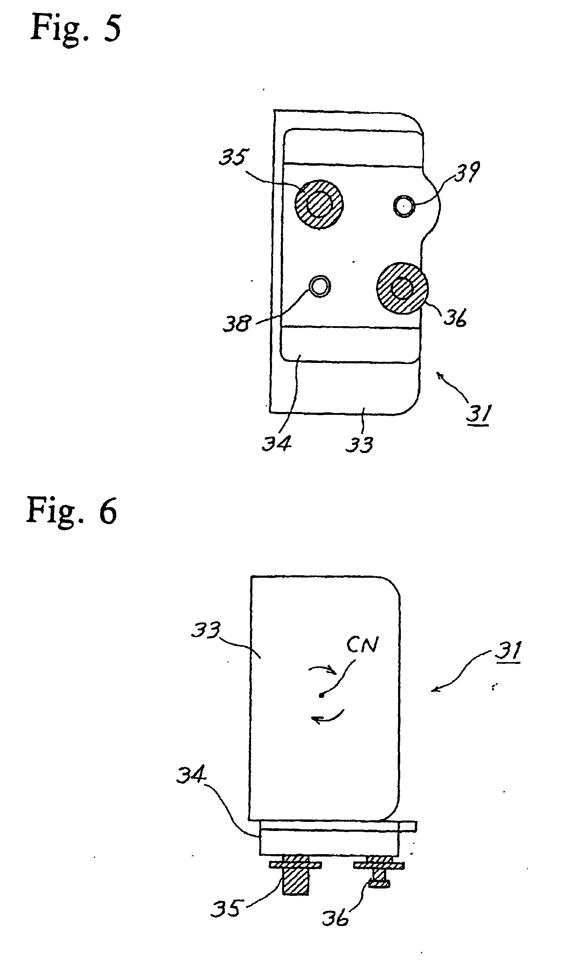

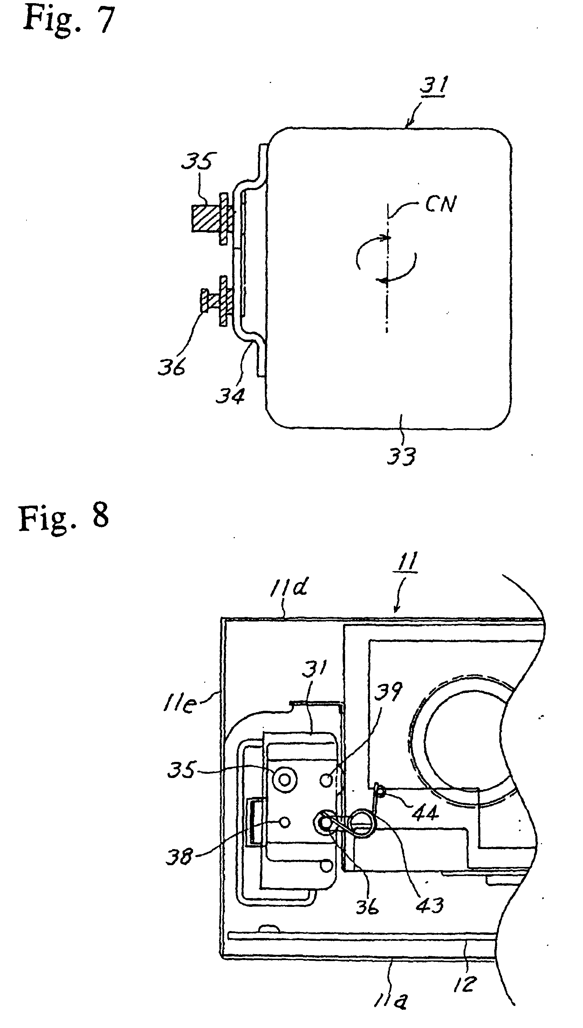

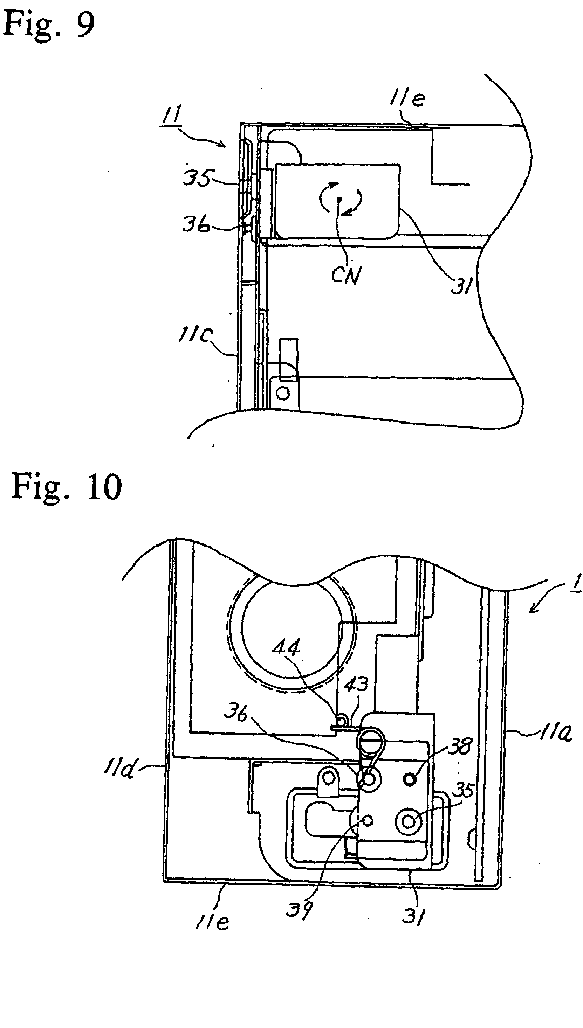

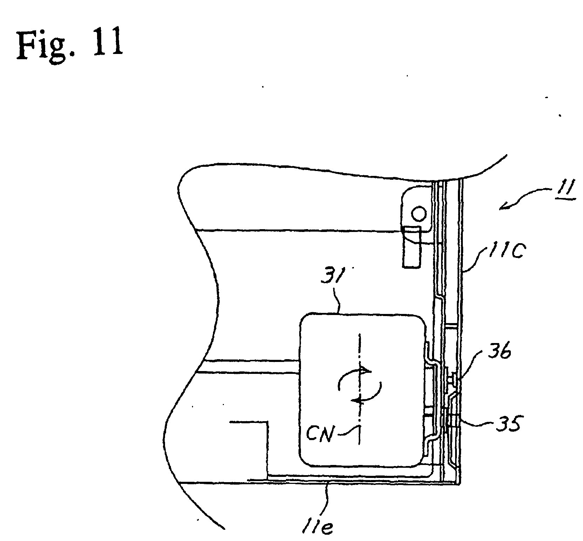

Fig. 5 is a front elevation of the gyro sensor in the mode of embodiment of the present invention; Fig. 6 is a top plan view of the gyro sensor in the mode of embodiment of the present invention; Fig. 7 is a side elevation of the gyro sensor in the mode of embodiment of the present invention; Fig. 8 is a lefthand side elevation of the navigation unit, when installed horizontally, in the mode of embodiment of the present invention; Fig. 9 is a top plan view of the navigation unit, when installed horizontally, in the mode of embodiment of the present invention; Fig. 10 is a lefthand side elevation of the navigation unit, when installed horizontally, in the mode of embodiment of the present invention; and Fig. 11 is a back elevation of the navigation unit, when installed horizontally, in the mode of embodiment of the present invention.

In Figs. 5 to 7, the gyro sensor 31 is equipped with a body 33 and a bracket 34 fixed on one (or front) face of the body 33. To the bracket 34, there are attached a first pin 35 acting as a knob for changing the mounting direction of the gyro sensor 31, and a second pin 36 arranged orthogonally of the first pin 35. In predetermined two portions on the orthogonal line of the bracket 34, on the other hand, there are formed threaded holes 38 and 39 for fixing the gyro sensor 31 in the individual mounting positions. Incidentally, reference letters CN designate a rotation detecting axis of the gyro sensor 31.

Next, in Figs. 8 to 11: the numeral 11 designates the casing; the numeral 11a the bottom wall; the numeral 11c the side wall; the numeral 11d the top wall; the numeral 11e the back wall; the numeral 12 the PC board; the numeral 31 the gyro sensor; the numeral 35 the first pin; the numeral 36 the second pin; the numerals 38 and 39 the threaded holes; numeral 44 a retaining member; and the letters CN the rotation detecting axis.

On the other hand, numeral 43 designates a spring which is fixed at one end by the second pin 36 and at its other end by the retaining member 44 so as to urge the second pin 36 in a predetermined direction. This spring 43 gives a click feed to the operator when the mounting direction of the gyro sensor 31 is changed.

Moreover, the gyro sensor 31 is supported to rock in the casing 11 and is so mounted to change the first mounting direction, as shown in Figs. 8 and 9, and the second mounting direction perpendicular to the first one, as shown in Figs. 10 and 11.

Specifically, when the navigation unit is to be installed horizontally, as shown in Figs. 8 and 9, the top wall 11d is placed in the upper position, and the bottom wall 11a is placed in the lower position. By arranging the first pin 35 and the second pin 36 at the side of the upper top wall lid and at the side of the lower bottom wall 11a, respectively, the gyro sensor 31 is mounted in the first mounting direction so that the rotation detecting axis CN of the gyro sensor 31 can be positioned vertically.

On the other hand, when the navigation unit is to be installed vertically, as shown in Figs. 10 and 11, the front wall 11f (as shown in Fig. 3) is placed in the upper position, and the back wall lie is placed in the lower position. By arranging the second pin 36 at the side of the upper front wall 11f and the first pin 35 at the side of the lower back wall lie, therefore, the gyro sensor is mounted in the second mounting direction so that the rotation detecting axis CN of the gyro sensor 31 can be positioned vertically.

Here will be described a support device acting as a mounting mechanism for supporting the gyro sensor 31 in a manner to rotate, i.e., rock with respect to the casing 11.

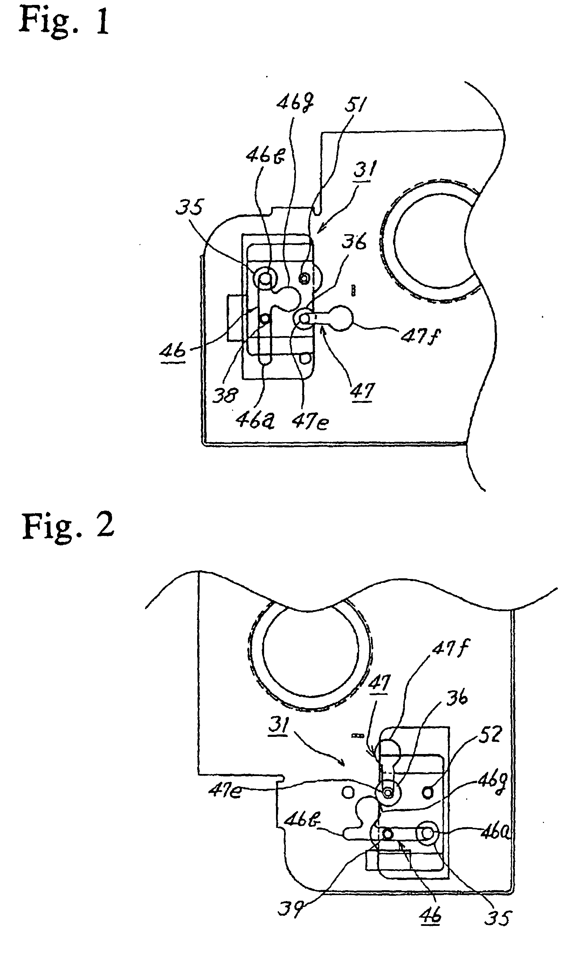

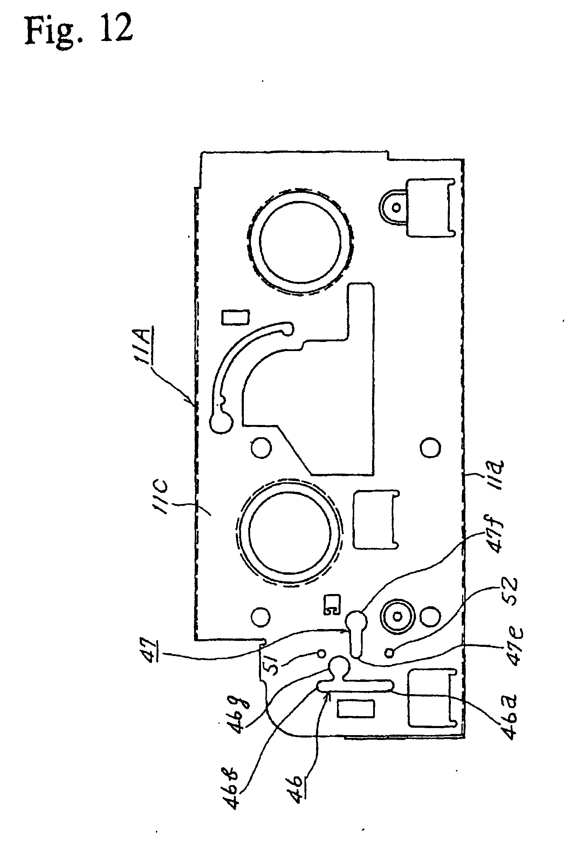

Fig. 1 is a diagram showing a first support state of the gyro sensor in the mode of embodiment of the present invention; Fig. 2 is a diagram showing a second support state of the gyro sensor in the mode of embodiment of the present invention; and Fig. 12 is a side elevation of the lower case unit of the casing in the mode of embodiment of the present invention.

In these Figures, reference numeral 11A designates a lower case unit, which is combined with the not-shown upper case unit to make the casing 11 (as shown in Fig. 11).

Moreover, the numeral 11a designates the bottom wall, and the numeral 11c designates the side wall. In a predetermined portion of this side wall 11c at the side of the back wall lie, there are formed a first guide groove 46, as extending in parallel with the back wall 11e, and a second guide groove 47, as extending in parallel with the bottom wall 11a and perpendicular to the first guide groove 46. The first pin 35 and the second pin 36 are guided by the first guide groove 46 and the second guide groove 47, respectively.

Incidentally, the first pin 35, the second pin 36, the first guide groove 46 and the second guide groove 47 constitute the support means altogether.

The first guide groove 46 is extended between its end portion 46a at the side of the bottom wall 11a and its end portion 46b at the side of the top wall (as shown in Fig. 4) and is protruded toward the front wall 11f to form a radially enlarged portion 46g slightly below the end portion 46b. On the other hand, the second guide groove 47 is extended between its end portion 47e at the side of the back wall lie and its end portion 47f at the side of the front wall 11f, and this end portion 47f is radially extended.

As a result, the first pin 35 can be inserted from the radially enlarged portion 46g into the first guide groove 46 and moved between the end portions 46a and 46b, and the second pin 36 can be inserted from the end portion 47f into the second guide groove 47 and moved between the end portions 47e and 47f. Incidentally, numerals 51 and 52 designate screw regulating holes.

In this case, if the distance between the first pin 35 and the second pin 36 is designated by L1 and if the distance between the first guide groove 46 and the end portion 47e of the second guide groove 47 is designated by L2, the distances are set to satisfy the following relation:

$$L1 > L2.$$

As a result, when the first pin 35 is placed in the end portion 46a or 46b, the second pin 36 is placed in the end portion 47e. When the first pin is moved in the first guide groove 46 from the end portion 46a to the end portion 46b, the second pin 36 once leaves the end portion 47e but returns to the end portion 47e. In this case, the gyro sensor 31 is rocked on the end portion 47e. Incidentally, the second pin 36 is urged toward the end portion 47e by the spring 43 (as shown in Fig. 10) so that the first pin 35 is urged toward the end portion 46a or the end portion 46b.

When the first pin 35 is placed in the end portion 46b of the first guide groove 46 whereas the second pin 36 is placed in the end portion 47e of the second guide groove 47, as shown in Fig. 1, the gyro sensor 31 can be mounted in the first mounting direction. In this state, moreover, the position of the screw regulating hole 51, as formed in the side wall 11c, and the position of the threaded hole 39, as formed in the bracket 34 (as shown in Fig. 7), are aligned, and the threaded hole 38 is positioned in the first guide groove 46. By driving fastening screws acting as the not-shown mounting means into the threaded holes 38 and 39, therefore, the gyro sensor 31 can be fixed in the first mounting direction.

On the other hand, when the first pin 35 is placed in the end portion 46a of the first guide groove 46 whereas the second pin 36 is placed in the end portion 47e of the second guide groove 47, as shown in Fig. 2, the gyro sensor 31 can be mounted in the second mounting direction. In this state, moreover, the position of the screw regulating hole 52, as formed in the side wall 11c, and the position of the threaded hole 38, as formed in the bracket 34, are aligned, and the threaded hole 39 is positioned in the first guide groove 46. By driving the fastening screws acting into the threaded holes 38 and 39, therefore, the gyro sensor 31 can be fixed in the second mounting direction.

Thus, merely by moving the first pin 35 linearly along the first guide groove 46, the mounting direction of the gyro sensor 31 can be changed between the first and second ones so that the navigation unit can be installed both horizontally and vertically with the gyro sensor 31 being mounted thereon.

Unlike the navigation unit of the prior art, moreover, the gyro unit having the gyro sensor need neither be manufactured separately of the navigation unit nor be installed directly on the vehicle. As a result, the navigation unit is not enlarged in its occupation area so that its mounting work can be simplified. Moreover neither the case of the gyro unit nor the communications circuit or the like between the navigation unit and the gyro unit are needed so that the cost can be lowered.

Nor need be arranged the two gyro sensors in the casing 11, so that neither the cost is raised nor is widened the occupation area.

In addition, while the first pin 35 is being moved in the first guide groove 46 from the end portion 46a to the end portion 46b, the second pin 36 once leaves the end portion 47e acting as the rocking center and moves in the second guide groove 47. Thus, it is possible to reduce the space necessary for changing the mounting direction of the gyro sensor 31 between the first mounting direction and the second mounting direction. As a result, it is possible to exploit the space in the casing 11 around the gyro sensor 31 effectively.

The gyro sensor 31 is so mounted in the mode of embodiment as can be mounted at the two stages in a changing manner between the first mounting direction and the second mounting direction but can be changed at multiple stages or continuously. In this modification, the rotation detecting axis CN of the gyro sensor 31 can be placed in the vertical direction.

Incidentally, the present invention should not be limited to the aforementioned mode of embodiment but can be modified in various manners as defined in the appended claims.

According to the present invention, as has been described in detail, the gyro sensor is mounted in the navigation unit. The navigation unit is provided with the mounting mechanism for changing the mounting direction of the gyro sensor so that the rotation detecting axis of the gyro sensor may be placed normal to the vehicle.

In this case, the rotation detecting axis of the gyro sensor can be placed normal to the vehicle so that the navigation unit can be installed in an arbitrary direction while mounting the gyro sensor.

Unlike the navigation unit of the prior art, moreover, the gyro unit having the gyro sensor need neither be manufactured separately of the navigation unit nor be installed directly on the vehicle. As a result, the navigation unit is not enlarged in its occupation area so that its mounting work can be simplified. Moreover neither the case of the gyro unit nor the communications circuit or the like between the navigation unit and the gyro unit are needed so that the cost can be lowered.

Nor need be arranged the two gyro sensors in the casing, so that neither the cost is raised nor is widened the occupation area.

Another navigation unit of the present invention mounts the gyro sensor. Moreover, this navigation unit includes: the support means for supporting the gyro sensor rotatably with respect to the casing; and the mount means for fixing the gyro sensor in a predetermined mounting direction so that the rotation detecting axis of the gyro sensor may take a vertical direction.

In this case, the gyro sensor is placed to have the vertical rotation detecting axis so that the navigation unit can be installed in an arbitrary direction while carrying the gyro sensor.

Unlike the navigation unit of the prior art, moreover, the gyro unit having the gyro sensor need neither be manufactured separately of the navigation unit nor be installed directly on the vehicle. As a result, the navigation unit is not enlarged in its occupation area so that its mounting work can be simplified. Moreover neither the case of the gyro unit nor the communications circuit or the like between the navigation unit and the gyro unit are needed so that the cost can be lowered.

Nor need be arranged the two gyro sensors in the casing, so that neither the cost is raised nor is widened the occupation area.

Still another navigation unit of the present invention includes: the casing; and the gyro sensor supported in a rocking manner in the casing and mounted such that it can be changed between the first mounting direction and the second mounting direction perpendicular to the first mounting direction.

In this case, the mounting direction of the gyro sensor can be changed between the first mounting direction and the second mounting direction so that the navigation unit can be installed both horizontally and vertically while mounting the gyro sensor.

Unlike the navigation unit of the prior art, moreover, the gyro unit having the gyro sensor need neither be manufactured separately of the navigation unit nor be installed directly on the vehicle. As a result, the navigation unit is not enlarged in its occupation area so that its mounting work can be simplified. Moreover neither the case of the gyro unit nor the communications circuit or the like between the navigation unit and the gyro unit are needed so that the cost can be lowered.

Nor need be arranged the two gyro sensors in the casing, so that neither the cost is raised nor is widened the occupation area.

In the still another navigation unit of the present invention, moreover, the gyro sensor includes the first pin and the second pin, and the casing has the first guide groove for guiding the first pin and the second guide groove extending perpendicular to the first guide groove for guiding the second pin and for providing the rocking center of the gyro sensor at its end portion.

In this case, merely by moving the first pin linearly along the first guide groove, the mounting direction of the gyro sensor can be changed between the first mounting direction and the second mounting direction.

In addition, while the first pin is being moved in the first guide groove from the end portion to the end portion, the second pin once leaves the end portion acting as the rocking center and moves in the second guide groove. Thus, it is possible to reduce the space necessary for changing the mounting direction of the gyro sensor between the first mounting direction and the second mounting direction. As a result, it is possible to exploit the space in the casing around the gyro sensor effectively.

**Claims**

1.  A vehicle navigation unit comprising:

    a casing (11) for attachment to a vehicle with one wall member (11e) of said casing being orientable either vertically or horizontally;

    a gyro sensor (31), having an axis of rotation (CN), for detecting travel direction of the vehicle; and mounting means for rotatably supporting said gyro sensor within said casing for rotation between a first mounting position wherein said axis of rotation (CN) is oriented vertically and parallel to said one wall member (11e), with said one wall member vertically oriented, and a second mounting position wherein said axis of rotation is oriented vertically and perpendicular to said one wall member (11e), with said one wall member horizontally oriented.

2.  A vehicle navigation unit comprising:

    a gyro sensor (31) for detecting travel direction of a vehicle, said gyro sensor having, extending therefrom, first and second pins (35 and 36, respectively); and
    mounting means for mounting said gyro sensor within a casing (11), said mounting means including a first guide groove (46) in the casing for receiving and guiding said first pin (35) and a second guide groove (47) extending perpendicularly to said first guide groove in the casing for receiving and guiding said second pin (36), and
    wherein said second guide groove provides a rocking center for said gyro sensor.

**3.** A vehicle navigation unit according to claim 2: wherein said casing (11) is attachable to the vehicle with one wall member (11e) and wherein said mounting means rotatably supports said gyro sensor (31), having an axis of rotation (CN), within said casing for rotation between a first mounting position wherein said axis of rotation is oriented vertically and parallel to said one wall member (11e), with said one wall member vertically oriented, and a second mounting position wherein said axis of rotation is oriented vertically and perpendicularly to said one wall member, with said one wall member horizontally oriented.

**Patentansprüche**

**1.** Fahrzeugnavigationseinheit mit:

einem Gehäuse (11), das dazu geeignet ist, an einem Fahrzeug befestigt zu werden, wobei ein Wandelement (11e) des Gehäuses entweder vertikal oder horizontal ausgerichtet werden kann;
einem Gyrosensor (31) mit einer Drehachse (CN) zum Erfassen der Fahrtrichtung des Fahrzeugs; und
einer Halterungseinrichtung zum drehbaren Halten des Gyrosensors im Gehäuse für eine Drehbewegung zwischen einer ersten Montageposition, in der die Drehachse (CN) vertikal und parallel zum einen Wandelement (11e) ausgerichtet ist, wenn das eine Wandelement vertikal ausgerichtet ist, und einer zweiten Montageposition, in der die Drehachse vertikal und senkrecht zu dem einen Wandelement (11e) ausgerichtet ist, wenn das eine Wandelement horizontal ausgerichtet ist.

**2.** Fahrzeugnavigationseinheit mit:

einem Gyrosensor (31) zum Erfassen der Fahrtrichtung eines Fahrzeugs, wobei der Gyrosensor einen ersten und einen zweiten Bolzen (35 bzw. 36) aufweist, die sich vom Gyrosensor aus erstrecken; und
einer Halterungseinrichtung zum Halten des Gyrosensors in einem Gehäuse (11), wobei die Halterungseinrichtung eine erste Führungsnut (46) im Gehäuse zum Aufnehmen und Führen des ersten Bolzens (35) und eine sich senkrecht zur ersten Führungsnut im Gehäuse erstreckende zweite Führungsnut (47) zum Aufnehmen und Führen des zweiten Bolzens (36) aufweist, und wobei durch die zweite Führungsnut eine Drehmitte für den Gyrosensor bereitgestellt wird.

**3.** Fahrzeugnavigationseinheit nach Anspruch 2, wobei das Gehäuse (11) mit einem Wandelement (11e) am Fahrzeug befestigt werden kann; und
wobei die Halterungseinrichtung den Gyrosensor (31), der eine Drehachse (CN) aufweist, im Gehäuse drehbar hält für eine Drehbewegung zwischen einer ersten Montageposition, in der die Drehachse vertikal und parallel zum einen Wandelement (11e) ausgerichtet ist, wenn das eine Wandelement vertikal ausgerichtet ist, und einer zweiten Montageposition, in der die Drehachse vertikal und senkrecht zu dem einen Wandelement ausgerichtet ist, wenn das eine Wandelement horizontal ausgerichtet ist.

**Revendications**

**1.** Unité de navigation pour véhicule comprenant :

un boîtier (11) pour fixation à un véhicule par un élément de paroi (11e) dudit boîtier orientable verticalement ou horizontalement; un détecteur gyroscopique (31), ayant un axe de rotation (CN), pour détecter la direction de déplacement du véhicule; et un moyen de montage pour supporter avec possibilité de rotation ledit détecteur gyroscopique à l'intérieur dudit boîtier pour une rotation entre une première position de montage dans laquelle ledit axe de rotation (CN) est orienté verticalement et parallèle audit élément de paroi (11e), ledit élément de paroi étant orienté verticalement, et une seconde position de montage dans laquelle ledit axe de rotation est orienté verticalement et perpendiculaire audit élément de paroi (11e), ledit élément de paroi étant orienté horizontalement.

**2.** Unité de navigation pour véhicule comprenant :

un détecteur gyroscopique (31) pour détecter la direction de déplacement d'un véhicule, ledit détecteur gyroscopique ayant, s'étendant à partir de lui, des première et seconde broches (35 et 36, respectivement); et un moyen de montage pour monter ledit détecteur gyroscopique à l'intérieur d'un boîtier (11), ledit élément de montage comportant une première rainure de guidage (46) dans le boîtier pour recevoir et guider ladite première broche (35) et une second rainure de guidage (47) s'étendant perpendiculairement à la première rainure de guidage dans le boîtier pour recevoir et guider ladite seconde broche (36), et dans lequel ladite second rainure de guidage fournit un centre de basculement pour ledit détecteur gyroscopique.

**3.** Unité de navigation pour véhicule selon la revendication 2 :

dans laquelle ledit boîtier (11) peut être fixé au véhicule par un élément de paroi (11e) et dans laquelle ledit moyen de montage supporte avec possibilité de rotation ledit détecteur gyroscopique (31), ayant un axe de rotation (CN), à l'intérieur dudit boîtier pour une rotation entre une première position de montage dans laquelle ledit axe de rotation est orienté verticalement et parallèle audit élément de paroi (11e), ledit élément de paroi étant orienté verticalement, et une seconde position de montage dans laquelle ledit axe de rotation est orienté verticalement et perpendiculairement audit élément de paroi, ledit élément de paroi étant orienté horizontalement.

# Fig. 1

# Fig. 2

# Fig. 3

Fig. 4

# Fig. 5

# Fig. 6

Fig. 7

Fig. 8

Fig. 9

Fig. 10

Fig. 11

Fig. 12